# EUROPÄISCHE PATENTSCHRIFT

(11) **EP 3 721 113 B1**
(45) Veröffentlichungstag und Bekanntmachung des Hinweises auf die Patenterteilung: **18.08.2021**
(21) Anmeldenummer: 18829727.9
(22) Anmeldetag: 04.12.2018
(51) Int. Cl.: F16F 1/38, F16F 1/40

(54) **LAGERKONSTRUKTION AUS EINZELN MONTIERBAREN UND AUSTAUSCHBAREN ELASTOMERLAGER-ELEMENTEN**
BEARING STRUCTURE MADE OF ELASTOMER BEARING ELEMENTS WHICH CAN BE MOUNTED AND EXCHANGED INDIVIDUALLY
STRUCTURE DE PALIER COMPOSÉE D'ÉLÉMENTS DE PALIER EN ÉLASTOMÈRE POUVANT ÊTRE MONTÉS INDIVIDUELLEMENT ET POUVANT ÊTRE REMPLACÉS

(30) Priorität: 08.12.2017 EP 17002003
(43) Veröffentlichungstag der Anmeldung: 14.10.2020
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2018/000542
(87) Internationale Veröffentlichungsnummer: WO 2019/110138

(56) Entgegenhaltungen:
- WO-A1-2010/054808
- WO-A1-2014/146763
- WO-A2-2012/153197

## Beschreibung

Die Erfindung betrifft eine Lagerkonstruktion für große und schwere Maschinen und Anlagen, wie beispielsweise eine Windkraftanlage. Die Erfindung betrifft insbesondere eine solche Lagerkonstruktion basierend auf Elastomerlager-Elementen, welche einzeln montierbar oder austauschbar sind, ohne dass die Lagerkonstruktion und damit die Anlage oder Maschine zumindest teilweise auseinandergebaut werden muss. Die Erfindung betrifft ferner ein Verfahren zum einfachen Austauschen von Elastomer-Elementen in einem Lager für schwere und große Anlagen und Maschinen.

Bei großen Maschinen und Anlagen müssen oft verschiedene große Bauteile miteinander verbunden werden, wobei einwirkende unterschiedliche Kräfte und Schwingungen kompensiert werden müssen. Dies geschieht in der Regel mit entsprechenden elastischen Lagern, welche zwischen den zusammenzufügenden Bauteilen angebracht sind.

Dies ist beispielsweise der Fall bei der elastischen Verbindung zwischen Rotorwelle und dem Getriebe, oder aber auch zwischen Gondel und Turm einer Windkraftanlage.

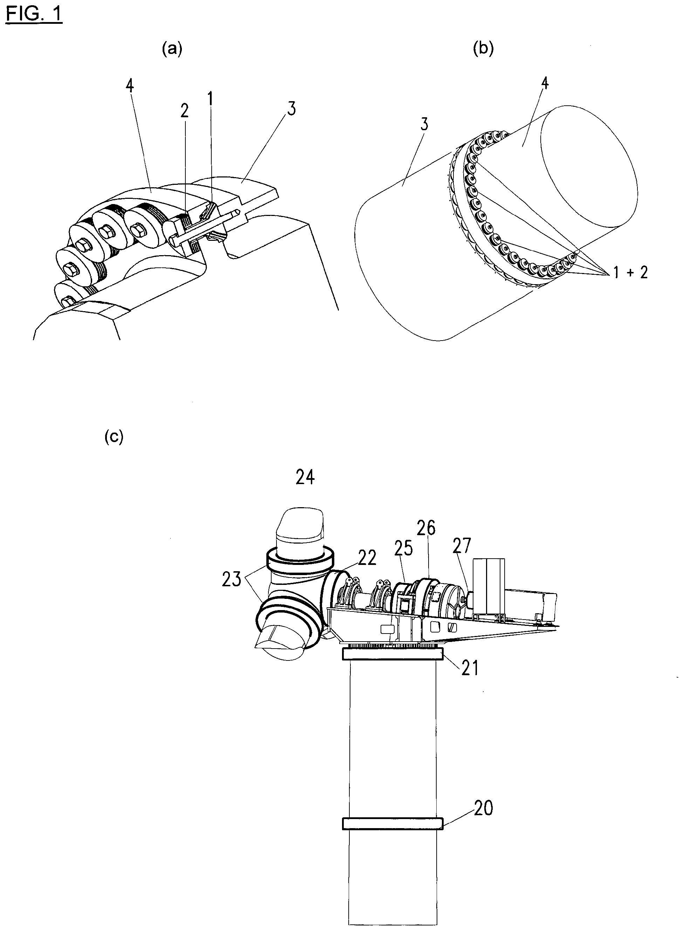

In der WO 2010/054808 wird ein elastisches Maschinen- oder Getriebelager, insbesondere für den Einsatz in einer Windkraftanlage beschrieben zur Übertragung der in allen Raumrichtungen, insbesondere axial und radial auftretenden Kräfte und Momente und zur Reduzierung und Isolierung auftretender Schwingungen, wobei dieses Lager ein axial ausgerichtetes elastisches Sandwichelement und ein oberhalb oder unterhalb davon angebrachtes elastisches Konuselement, umfasst, dessen Achse senkrecht zu der Fläche des Sandwichelements ausgerichtet ist und dessen verjüngtes Ende gegenüber diesem Sandwichelement positioniert ist (Fig. 1).

Die Konstruktion ist dabei so beschrieben, dass bei verschleißbedingtem Austausch eines elastischen Elementes, insbesondere eines Konuselementes, die Austauschteile nur axial entfernt werden können, was gleich bedeutet, dass dieser Teil der Anlage mühevoll zerlegt und anschließend wieder zusammengebaut werden muss. Trotz der bekannten Vorteile dieses Lagers in Bezug auf seine Schwingungsentkopplung, kann es nur an zugänglichen Stellen in der Anlage oder Maschine eingesetzt werden, die ein Zerlegen der Anlage oder Teilen davon ermöglichen.

Es bestand somit die Aufgabe eine Lageranordnung aus elastischen Elementen zur Verfügung zu stellen, die es durch entsprechende konstruktive Maßnahmen ermöglicht, einzelne elastische und dem Verschleiß ausgesetzte Lagerelemente auszuwechseln, ohne dass andere Teile der Lageranordnung ausgebaut oder maßgeblich verändert werden müssen.

Die Aufgabe wurde durch die hier vorgestellte und beanspruchte Lageranordnung gelöst.

Gegenstand der Erfindung ist somit eine Lagerkonstruktion aus einzelnen elastischen Lagerelementen zur elastischen Lagerung von Maschinen- oder Anlagenteilen, wobei jedes elastisches Lagerelement ohne Demontage und erneuter Montage der gesamten Lagerkonstruktion oder Teilen einzeln montierbar und austauschbar ist.

Insbesondere ist eine solche Lageranordnung Gegenstand der Erfindung, welche eine Vielzahl von elastischen Lagerelementen, mindestens 6, 3 vorzugsweise 12 - 72, aufweisen, wobei die einzelnen elastischen Lager vorzugsweise ringförmig zwischen zwei Flanschen angeordnet und verspannt sind. Die Flansche gehören zu zwei Maschinenteilen, die hierdurch miteinander elastisch lagernd verbunden werden sollen, beispielsweise eine Rotorwelle mit einem Getriebeblock einer Windkraftanlage.

Die erfindungsgemäßen Lagerkonstruktionen oder Lageranordnungen umfassen somit einen ersten Flansch (3) und einen zweiten Flansch (4), die gegeneinander angeordnet und über zwischen ihnen angebrachten mehreren, mindestens drei, vorzugsweise sechs oder acht, elastischen Lagern (1) durch Spannvorrichtungen (5) verspannt sind, so dass hierdurch eine wirkungsvolle Schwingungsdämpfung bzw. Schwingungs - und Schallentkopplung eintreten kann. Die einzelnen Lagerelemente (1) sowie die entsprechenden Bereiche der Flanschstücke (3) und (4) sind dabei erfindungsgemäß so gestaltet, dass, sie einzeln ausgebaut und durch neue ersetzt werden können, ohne dass dabei die gesamte Anordnung auseinandergebaut und nach Austausch wieder zusammengesetzt werden muss.

Somit ist Gegenstand der Erfindung eine auf mindestens sechs 3 ringförmig angeordneten Elastomerlager-Elementen beruhenden Lagerkonstruktion bzw. Lageranordnung zur elastischen Lagerung von schweren Maschinenteilen, wobei jedes Elastomerlager-Element ohne Demontage und erneuter Montage der gesamten Lagerkonstruktion oder Teilen der zugehörigen Maschine einzeln montierbar und austauschbar ist, umfassend drei, vier, sechs oder mehr, vorzugsweise 12 - 72, elastische Lager (1), einen ersten Flansch (3), der eine axiale Bohrung (10a) mit einem endständigen Innengewinde (11) aufweist, und einen zweiten gegenüberliegenden Flansch (4) mit einer oder mehreren durchgehenden Bohrungen (10c), wobei jedes Lager (1) im Wesentlichen sich aus einem Gehäuse (1a), einem inneren unelastischen Kern (1c), welcher mittig eine Bohrung (10b) aufweist, und einem eigentlichen Elastomerteil (1d) aus einer oder mehrerer Elastomerschichten, die durch unelastische Schichten voneinander getrennt sind, zusammensetzt, und wobei die mehreren Lager (1) zwischen den beiden Flanschen (3)(4) ringförmig angeordnet sind, und letztere mittels Spannmitteln (5) über axiale Bohrungen (10) in den besagten einzelnen Bauteilen miteinander verspannt sind.

Vorzugsweise umfassen besagte Spannmittel (5) einen Schraubbolzen, welcher mindestens durch die Bohrung (10c) im Flansch (4), und die Bohrung (10b) im Lager (1) geführt ist und in das Innengewinde (11) am Ende der Bohrung (10a) des Flansches (3) unter Verspannung der Lagerkonstruktion geschraubt werden kann.

Diese Lageranordnung ist insbesondere dadurch erfindungsgemäß gekennzeichnet, dass (i) der zweite Flansch (4) auf der dem Lager (1) bzw. dem ersten Flansch (3) zugewandten Seite eine zu einer Bohrung (10c) konzentrisch angeordnete Vertiefung (7) oder Einsenkung aufweist; in welche ein entsprechend geformtes Teil des Lagers (1) - entweder ein Teil des Gehäuses oder eine spezielles Adapterteil (1b) im betriebsbereiten Zustand der Lagerkonstruktion unter Vorspannung passgenau eingefügt und fixiert ist, wobei bei Demontage der Lagerkonstruktion zwecks Austausch des Lagers (1) dasselbige durch Aufhebung oder Verringerung der Vorspannung aus der besagten Vertiefung (7) heraus in den Raum zwischen den Flanschen (3) und (4) geschoben werden kann; (ii) jedes elastische Lager (1) mit seiner Flansch (4) zugewandten Fläche oder mit dem darauf angebrachten Adapterteil (1b) genau in die besagte Vertiefung (7) im betreffenden Bereich des Flansches (4) passt, wobei zumindest der Teil der Bohrung (10b) des Lagers, der zum Flansch (4) ausgerichtet ist, mit einem Gewinde zur Aufnahme eines Montagevorspannbolzens (13) versehen ist, mit welcher das Lager (1) bei Montage im Zuge des Austausches nach Entfernung der Spannmittel (5) durch Einschieben in die Vertiefung (7) vorgespannt und ggf. bei Demontage wieder herausgeschoben werden kann; und (iii) zwischen jedem Lager (1) und dem Flansch (3) mindestens eine mit einer mittigen Bohrung versehene Distanzscheibe (9) eingebracht ist, die auch aus zwei Distanzscheibenhälften (9a)(9b) bestehen kann.

Die besagte Distanzscheibe sollte zweckmäßigerweise einen Reibungskoeffizienten seiner Seitenflächen gegenüber den angrenzenden Flächen des Lagers (1) und des Flansches (3) aufweisen, der ausreichend hoch ist (vorzugsweise von ≥ 0.3, insbesondere von ≥ 0.4 - 0.6, abhängig von der Dicke des Spannbolzens (5)), um bei den gewählten Belastungen der anderen Teile ein Verrutschen im Betrieb zu verhindern.

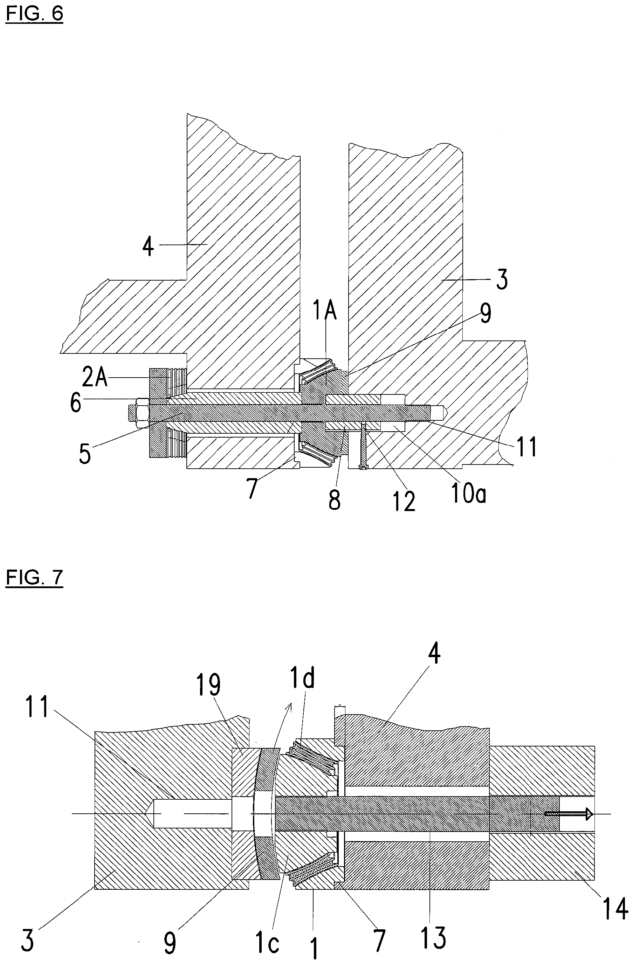

Die radiale Kraftübertragung erfolgt somit durch Reibschluss der Distanzscheibe (9) bei festgezogenem Spannmittel (5). Der Reibungskoeffizient bestimmt dabei, wie groß die Reibungskraft im Verhältnis zur Normalkraft ist; eine höhere Reibungszahl bedeutet eine größere Reibungskraft. Je geringer die Reibungskraft zwischen Distanzscheibe (9) und den beidseitig angrenzenden Flächen ist, desto leichter kann das Lager bei starken Belastungen an dieser Stelle verrutschen. Durch Einsatz eines Spannbolzens (5) mit größerem Durchmesser und / oder größerer Festigkeit und höherer Vorspannung kann diesem Problem entgegengewirkt werden. Eine bessere und überraschende Lösung ist jedoch der erfindungsgemäße Einsatz einer in einer Richtung sphärisch, konkav oder konvex gekrümmten Oberfläche der Distanzscheibe(9) bzw. ihrer Scheibenhälften, wie dies in Fig. 7 gezeigt ist.

Vorzugsweise sind beide Flächen (16) der Distanzscheibe (9) gleichermaßen und in gleicher Richtung sphärisch gekrümmt, wobei der gedachte Kreismittelpunkt der Kugelsphären axial und vorzugsweise in Richtung des elastischen Lagers (1) bzw. des Flansches (4) angeordnet sind. Für ein Lagerelement einer Windkraftanlage entspricht die Krümmung der beiden Flächen der Distanzscheibe (9) einen Kreis mit einem Durchmesser von 30 - 100cm, insbesondere 40 - 60 cm.

Bedingt durch die Krümmung der Distanzscheibe (9), ist es erforderlich, auch die angrenzenden Flächen entsprechend mit der gleichen Krümmung zu versehen, damit im betriebsbereiten Zustand die Reibungskräfte optimal übertragen werden können. Somit weist also bei dieser bevorzugten Ausführungsform das elastische Konuslager (4A) (1C) zur Seite der Distanzscheibe (9) ebenfalls eine entsprechend gekrümmte, vorzugsweise sphärisch gekrümmte Basisfläche auf.

Ebenso und in gleicher Weise weist in diesem Fall der Flansch (3) in dem Kontaktbereich eine entsprechende Krümmung auf. Dabei kann dies direkt auf dem Flansch (3) realisiert werden, oder aber einfacher über eine Trägerplatte (19), welche entweder auf den Flansch befestigt wird oder in einer passenden Vertiefung im Flansch (3) Platz findet.

Erfindungsgemäß ist die Distanzscheibe (9) im betriebsbereiten Zustand der Lageranordnung fest zwischen dem Flansch (3) und dem Lager (1) eingeklemmt und kann bei Demontage der Lagerkonstruktion nach Verringerung der Vorspannung im Lager (1) durch Entfernung der Spannmittel (5) mittels des Montagevorspannbolzens (13) entfernt werden. Vorzugsweise ist die Distanzscheibe (9) dicker als die Vertiefung (7) am Flansch (4).

In einer weiteren Ausführungsform der Erfindung wird eine entsprechende Lagerkonstruktion vorgeschlagen, welche eine axial verschiebbare und vorzugsweise mit einem Innengewinde ausgestattete Hülse (8) vorsieht, die in der axialen Bohrung (10a) des Flansches (3) ganz oder teilweise Aufnahme Platz findet, und im betriebsbereiten Zustand der Lagerkonstruktion die Bohrung (10b) im Lager (1) und die Bohrung (10a) im Flansch (3) jeweils teilweise ausfüllt, und eine Länge aufweist, die gleich oder kleiner der Länge der Bohrung (10a) ist, wobei zumindest der Teil (10b') der Bohrung (10b), der zum Flansch (3) ausgerichtet ist, den gleichen Durchmesser wie die Bohrung (10a) im Flansch (3) zur Aufnahme der verschiebbaren Hülse (8) besitzt. Die Hülse (8) selbst ist im betriebsbereiten Zustand durch Feststellmittel (12), beispielsweise eine Feststellschraube in einem Längsschlitz der Hülse, fest fixiert, und kann bei Demontage der Lagerkonstruktion zwecks Austausch des elastischen Lagers (1) mit Hilfe eines Montagebolzens (18) vollständig aus dem elastischen Lager (1) heraus in die Bohrung (10a) des Flansches (3) geschoben werden. Generell kann somit die Hülse in dem Raum, der von den Bohrungen (10a) und (10b') gebildet wird, hin und her verschoben werden.

Der Einsatz einer zusätzlichen Hülse (8), wie beschrieben, ist dann zweckmäßig oder gar erforderlich, wenn der Platz und die Größenverhältnisse der Lageranordnung oder einzelner Bereiche limitiert sind, so dass die Teile, welche hohe Kräfte aufnehmen müssen (beispielsweise die Spannbolzen (5)), nicht ausreichend groß oder nicht mit ausreichend großer Festigkeit zur Verfügung gestellt werden können.

Kann jedoch der Spannbolzen (5) dick genug sein und die Distanzscheibe (9) von ausreichend großer Reibfläche, ist der Einsatz einer zusätzlichen mit einem Innengewinde versehenen Hülse entbehrlich, zumal hierdurch nicht nur die Montage oder Demontage einfacher wird, sondern auch auf eine entsprechende erweiterte Ausgestaltung in Form von unterschiedlichen Bohrungsdurchmessern (10b)(10b') des unelastischen Kerns (1c) verzichtet werden kann.

Bei Verwendung einer schiebbaren Hülse müssen umgekehrt keine besonderen Anforderungen bzw. Limitierungen and die Reibkraft, bzw. den erforderlichen Reibungskoeffizienten gestellt werden.

Die Bohrungen, welche mindestens durch die Bauteile (4) (1) und (9) gehen und im Flansch (3) enden, sind entsprechend ihrer Funktion und der in ihr geführten Bauteile mit unterschiedlichen oder gleichen Durchmessern ausgestattet, um unterschiedlich oder gleich dicke Spann(5)- und/ oder Montagemittel (13)(18) in ihnen führen zu können..

So ist in den meisten möglichen Ausführungsformen der Erfindung die Bohrung (10c) im Flansch (4) größer ist als die Bohrungen (10a) im Flansch (3) und (10b) im Lager (1).

Ferner ist der Durchmesser der mit dem Innengewinde ausgestatteten Teil der Bohrung (10b) des elastischen Lagers (1) in der Regel kleiner ist als der Durchmesser des Teils der Bohrung (10b') im gleichen Lager, sofern eine verschiebbare Hülse (8) zum Einsatz kommt. In diesem Fall sollten die Bohrung (10a) im Flansch (3) und die Bohrung (10b') im elastischen Lager (1) den gleichen Durchmesser aufweisen, der dem Außendurchmesser der Hülse (8) entspricht. Ferner sollten in diesem Fall die Länge der Bohrung (10b') so gewählt sein, dass sie zumindest einen Teil der Länge der Hülse (8), vorzugsweise die Hälfte, durch Verschieben aufzunehmen vermag, während die andere Hälfte ein Teil des Raumes der Bohrung (10a) im Flansch (3) ausfüllt. Die Bohrung (10a) im Flansch (3) sollte mindestens so lang sein, dass sie die Hülse (8) ganz aufnehmen kann, was notwendig bei Montage und Demontage des elastischen Lagers (1) ist.

Generell kann jede Bauweise eines elastischen Lagers (1) zwischen den Flanschen (3) und (4) eingesetzt werden. In einer bevorzugten Ausführungsform der Erfindung kommt jedoch ein elastisches Konuslager bzw. ein elastisches Kegellager zum Einsatz. Hierbei sind die elastischen Schichten, die von unelastischen Zwischenschichten getrennt sind, so angeordnet, dass sie eine Konus- oder Kegelform einnehmen mit einer zentralen Achse, die mit der Achse des Lagers bzw. der Bohrungen (10) übereinstimmt. Der Konus kann sich dabei sowohl in Richtung des Flansches (3) als auch in Richtung des Flansches (4) öffnen, vorzugsweise öffnet er sich in Richtung des Flansches (3), insbesondere dann, wenn ein weiteres elastisches Element (2) auf der anderen nach außen weisenden Seite des Flansches (4) angebracht ist.

In einer bevorzugten Ausführungsform der Erfindung umfasst die Lagerkonstruktion sowohl die erfindungsgemäß aufgebauten elastischen Lager (1), die als Konus-Elemente (1A) mit vorzugsweise offenen Konus zum Flansch (3) ausgebildet sind, als auch ein weiteres als Sandwich-Element (2A) ausgebildetes elastisches Lager (2), das gegenüber auf der Außenseite von Flansch (4) angebracht ist. Sandwich-Element (2A) und Konus-Element (1A) sind vorzugsweise über eine Distanzhülse (6), die in die Bohrung (10c) des Flansches (4) eingeschoben ist, miteinander verbunden.

Dieses Doppellager, welches im Prinzip, jedoch ohne die hier dargelegten erfindungsgemäßen Charakteristika in Bezug auf Austauschbarkeit und vereinfachte Montierbarkeit, aus der WO 2010/054808 bekannt ist, zeigt hervorragende Eigenschaften bei der Dämpfung von Schwingungen, insbesondere Biegeschwingungen, bei schweren Maschinen, insbesondere Windkraftanlagen, bei denen in der Regel ein komplettes Auseinandernehmen von betreffenden Bauteilen aufgrund der Größe, des Gewichts und der Lokalität besonders schwierig, ja zuweilen unmöglich ist.

An Hand dieses Doppellagers soll die Erfindung und ihre Nutzung im Folgenden genauer beschrieben werden.

Hierbei und in den Ansprüchen werden folgende Bezugsgrößen und Abbildungen genannt:
(1) Elastisches Lagerelement zwischen den Flanschen (3) und (4)
   (1a) Gehäuse des Lagerelements
   (1b) Adapterteil
   (1c) unelastischer Kern mit Bohrung (10b)(10b')
   (1d) Elastomerteil
(1A) elastisches Konuselement
(2) Elastisches Lagerelement außen am Flansch (4)
(2A) elastisches Sandwich-Element
(3) erster Flansch - mit Bohrung (10a) zur Aufnahme der Hülse (8), und endständiger Gewindebohrung (11)
(4) zweiter Flansch - mit Bohrung (10c)
(5) Spannmittel / Schraubbolzen
(6) Distanzhülse für Bohrung (10c)
(7) Vertiefung innenseitig Flansch (3) zur Aufnahme des Adapterteils (1b)
(8) schiebbare Hülse
(9) Distanzscheibe zwischen elastischem Lagerelement (1) und Flansch (3) mit mittiger Bohrung
   (9a) Distanzscheibenhälfte
   (9b) Distanzscheibenhälfte
(10) ineinander gehende Bohrungen in (1)(2)(3)(4)
   (10a) Bohrung im Flansch (3) zur Aufnahme der Hülse (8) bei Montage
   (10a') Innendurchmesser des Innengewindes der Hülse (8)
   (10b) Bohrung im Lager (1), flansch(4)seitig mit Innengewinde zur Verschraubung mit Montagevorspannbolzen (13)
   (10b') bei Verwendung der Hülse (8): Bohrung im Lager (1) flansch(3)seitig zur Aufnahme eines Teils der Hülse (8) im betriebsbereiten Zustand;
   (10c) Bohrung im Flansch (4)
   (10d) Bohrung im elastischen Lager (2)
   (10e) Bohrung im Montage-Zugelement (14)
(11) Innengewinde endständig zu Bohrung (10a) im Flansch (3) zur Verschraubung mit Vorspannmittel/Vorspannschraube (5)
(12) Feststellmittel für Schiebehülse (8) senkrecht zur Bohrung (10)(10a)
(13) Montagevorspannbolzen mit Gewinde zum Verschrauben mit Lagers (1)
(14) Montage-Zugeinrichtung (z.B. Zugzylinder) zum Herausziehen der Montagevorspannbolzen (13) aus Flansch (4) unter gleichzeitigem Einschieben des an der Schraube (13) befestigten Lagers (1)
(15) Zugkraft auf Montagemittel (13) oder (18)
(16) Reibungsflächen Distanzscheibe
(17) Spalt zwischen flansch(3)seitiger Fläche des elastischen Lagers (1) und der Distanzscheibe (9), bzw. ihrer Scheibenhälften;
(18) Montagebolzen (z.B. mit Gewinde) zur Befestigung und Führung der Hülse (8)
(19) Trägerplatte zwischen Distanzscheibe (9) und Flansch (3) zur Lagerung der Distanzscheibe
20. Entkopplung Turm
21. Entkopplung Turm Oben
22 Entkopplung Rotornabe
23 Entkopplung Blattanschluss
24 Entkopplung Blatt Teilung Rund oder an Blattform angepasst
25 Entkopplung Rotorwelle
26 Entkopplung Getriebe Planeten Hohlrad
27 Entkopplung Generator Welle

Fig.1 (a) und (b) zeigen eine Rotor-Getriebeverbindung einer Windkraftanlage des Standes der Technik. Hierbei sind zahlreiche Lagereinheiten rund um die Rotorwelle einer Windkraftanlage angeordnet. Jede Lagereinheit besteht aus einem flachen elastischen Sandwichlager-Element und einem elastischen Konuslager-Element, wobei die Konuselemente zwischen den beiden unterschiedlichen Maschineteilen angeordnet sind. (c) zeigt mögliche Anordnungen von Flansch-Verbindungen in Windkraftanlagen des Standes der Technik.

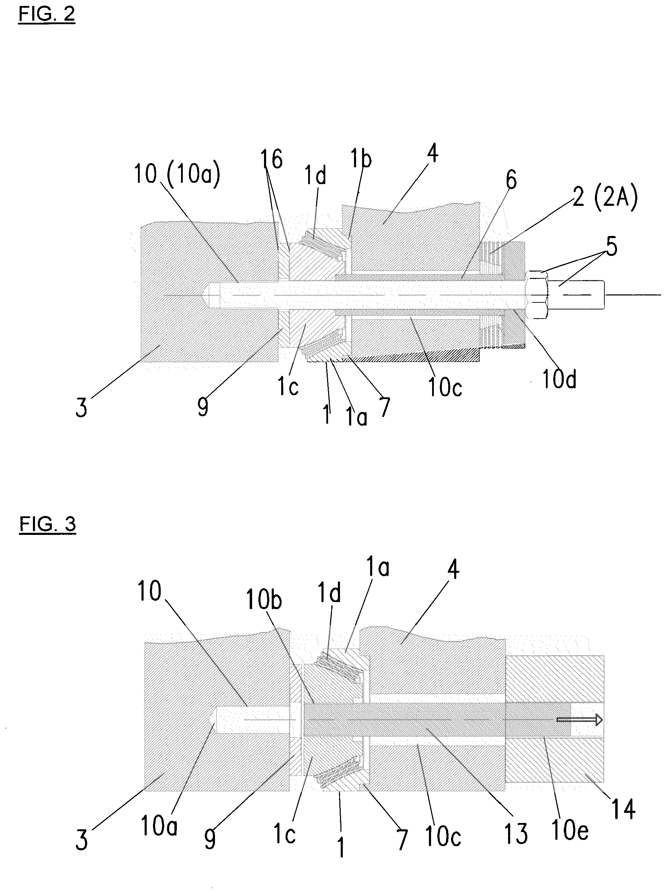

Fig. 2 zeigt eines von vielen Doppellagerelementen der Lageranordnung gemäß der Erfindung im Betriebsbereiten Zustand bestehend aus einem elastischem Sandwich-Element (2)(2A) außenseitig zum Flansch (4) und einem elastischen Konuselement (1)(1A) zwischen Flansch (4) und Flansch (3), die über die Distanzhülse (6) mit einander in Verbindung stehen, welche durch die Bohrung (10c) geführt ist unter Sicherstellung eines ausreichenden Spiels für die Bewegung in der Bohrung. Das Konuselement besitzt einen unelastischen Kern (1c), welcher hier ein Innengewinde aufweist, zur Aufnahme der Montagevorspannschraube (13). Das Lagerelement (1) sitzt dabei mit einem Teil seiner Flansch (4) zugewandten Grundfläche in einer passenden Vertiefung (7) des Flansches (4), aus der es bei Demontage nach Verringerung der Vorspannung des Elementes leicht herausgezogen bzw. entnommen werden kann.

Zwischen dem Konuselement und dem Flansch (3) befindet sich eine Distanzscheibe (9), die auch aus zwei Scheibenhälften, zu besseren Einführung in den Spalt, insbesondere bei vorhandenem Bolzen in der Bohrung (10) der Lageranordnung, bestehen kann. Die Distanzscheibe weist Reibungsflächen (16) gegenüber der Innenfläche des Flansches (3) und der anderen Grundfläche des Konuselementes auf. Diese Reibungsflächen sollen verhindern, dass im verspannten Zustand bei auftretenden Biegekräften auf die Lageranordnung es zu einem Verrutschen und somit zu einer Destabilisierung des Lagers kommt.

Das Doppellager wird durch den Spannbolzen (5) verspannt, der in seiner Dicke so dimensioniert sein muss, dass er en primär auf ihn wirkenden Kräfte standhält und diese auf die mit ihm in Kontaktstehenden Bauteile weiterleitet. Der Durchmesser des Bolzens (5) ist dabei kleiner als die Bohrung (10b) des Innengewindes der Konuselementes (1)(1A), so das er durch dieses hindurchgesteckt werden kann und, wie gezeigt, mit dem Innengewinde (11) der Bohrung (10a) im Flansch (3) verschraubt werden kann. Die Bohrung (10a) im Flansch (3) kann auch vollständig durch das Bauteil hindurchgehen und eine Verschraubung kann auch alternativ durch eine Mutter auf der Außenseite des Flansches (3) erfolgen.

Fig. 3 zeigt das Doppellagerelement, wie in Fig. 2 dargelegt und oben beschrieben, jedoch ohne den Spannbolzen (5). Stattdessen befindet sich in den betreffenden Bohrungen (10c) und (10b) eine Montagevorspannschraube (13), welche mit dem Innengewinde des Konuselementes (1A) verschraubt ist, so dass dieses mit Hilfe einer mechanischen oder hydraulischen Zugvorrichtung (14) unter Aufbringung der Kraft (15) axial in Richtung des Flansches (4) gezogen werden kann. Dadurch werden die konusförmig angeordneten Elastomerschichten (1d) des Lagers (1) zusammengepresst unter Erhöhung bzw. Ausbildung einer Vorspannung. Hierdurch wird ein Spalt zwischen dem Konuselement und der Distanzscheibe (9) bzw. ihrer beiden Scheibenhälften erzeugt, der es ermöglicht, die Distanzscheibe herauszuziehen.

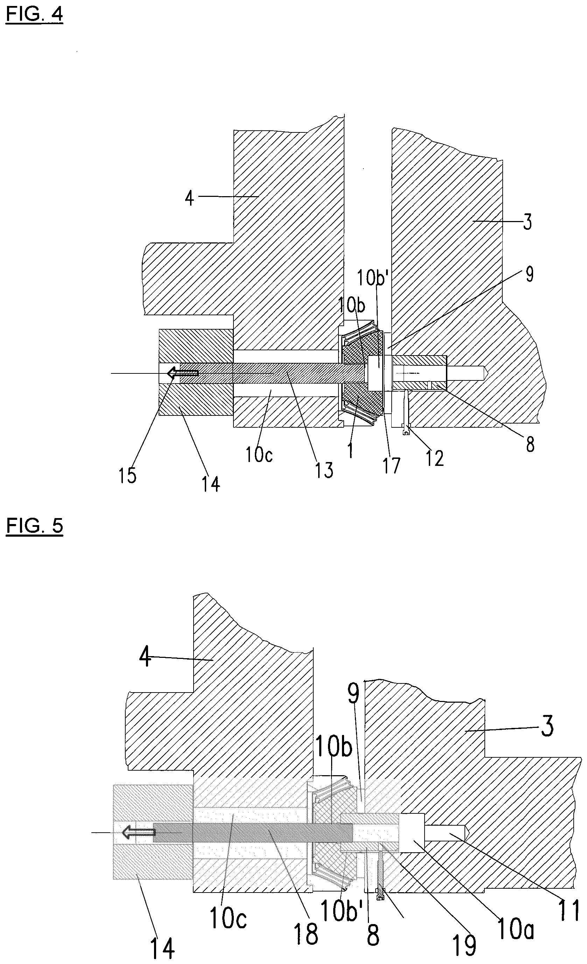

Fig. 4 zeigt das Doppellagerelement, wie oben beschrieben, jedoch in einer anderen Ausführungsform unter Zuhilfenahme eine schiebbaren Hülse (8). Wie bereits geschildert ist dies Ausführungsform angebracht, wenn die Reibungskräfte der Distanzscheibe (9) gegenüber den Grenzflächen nicht ausreicht. Die Hülse (8) befindet sich in dieser Ansicht vollständig in der Bohrung (10a) des Flansches (3). Die Hülse besitzt eine Innengewinde. Das Konuslager (1A) weist im Kern (1c) eine gegenüber Flansch (3) angeordnete Bohrung (10b') die im Durchmesser im Wesentlichen der Bohrung (10a) entspricht. In Richtung Flansch (4) besitzt das Lager (1) die Bohrung (10b) mit einem vorzugsweise kleineren Durchmesser. Die Bohrung (10b) ist mit einem Innengewinde versehen zu Aufnahme der ebenfalls gezeigten Montagevorspannschraube (13), welche mit einer axialen Kraft (15), erzeugt durch eine hydraulische oder mechanische Zugvorrichtung (14), in Richtung des Pfeiles gezogen werden kann.

Fig. 5 zeigt den gleichen Aufbau wie bei Fig. 4, jedoch nach Verschieben der Hülse (8) durch die mit ihrem Innengewinde verbundene Montageschraube (18) in den vorgesehenen Raum der Bohrung (10b') im elastischen Lager (1). Die Hülse wird dabei mittels eins Fixierungsbolzens (12) an dem Flansch (3) arretiert.

Fig.6 zeigt die Anordnung von Fig. 5, nach Entfernen der Zugvorrichtung (14) und Montage des Sandwichelementes (2A), der Distanzhülse (6) und des Spannbolzens (5), der mit dem Gewinde (11) der Bohrung (10a) des Flansches (3) verschraubt ist. In diesem Zustand ist das Doppellager betriebsbereit. Der Austausch von einzelnen Elastomerlager-Elementen aus einer aus mehreren Elastomerlager-Elementen umfassenden Lagerkonstruktion einer Anlage oder Maschine wird wie folgt durchgeführt.

Fig. 7 zeigt eine Fig. 3 entsprechende Lageranordnung.

Im Unterschied zu dieser besitzt die Distanzscheibe (9) ein sphärisch zum Konuslager (1A) ausgerichtete gekrümmte Form. Die gleich Form besitzt auch die Basisfläche des Konuslager, welche der Distanzscheibe (9) gegenüberliegt, so dass beide Flächen exakt aufeinander passen.

Die sphärisch gekrümmte Distanzscheibe lagert in dem gezeigten Ausführungsbeispiel mit auf einer entsprechend geformten und passenden Trägerplatte(19). Die Trägerplatte kann, wie gezeigt, in einer entsprechenden Vertiefung im Flansch (3) gelagert und fixiert sein, sie kann aber auch einfach auf der Flanschfläche verschraubt oder anderweitig befestigt sein.

Durch diese konstruktive Maßnahme kann die Reibungskraft nochmals erhöht werden, so dass in betriebsbereiten Zustand der Spannbolzen (5) weniger stark in Dicke und Festigkeit dimensioniert sein muss.

Im Folgenden wird das Verfahren der Demontage und Montage von elastischen Elementen in einer erfindungsgemäßen Lageranordnung näher beschrieben:

### Demontage bei Ausführungsformen ohne schiebbare Hülse:

Zunächst erfolgt das Herausdrehen der Spannschraube (5) aus dem Innengewinde (11) im Flansch (3) und Herausziehen aus den axialen Bohrungen (10a-c) der betreffenden Bauteile (Fig. 2). Distanzhülse (6) sowie das Sandwichlager (2A) lassen sich so entfernen. Da das Lagerelement nur eines von vielen in der gesamten Lagerkonstruktion ist, ist der lokale Anpressdruck immer noch so hoch, dass sich die Distanzscheibe nicht entfernen lässt. Das Konuselement (1A) ist ohnehin in der Vertiefung (7) fixiert.

Gemäß Fig. 3 erfolgt nunmehr das Einschrauben eines mit einem Gewinde versehenen Montagevorspannbolzens (13) in das Innengewinde der Bohrung (10b) des Lagers (1) von der Seite des Flansches (4) aus. Anschließend wird der Bolzen (13) mit einer hydraulischen oder mechanischen Zugvorrichtung verbunden, welche den Bolzen und damit auch das verbundene elastische Konuslager (1A) mit einer Zugkraft (15) axial in Richtung Flansch (4) zieht. Hierdurch werden die kegelförmig angeordneten Elastomerschichten (1d) des Lagers (1) zusammengepresst und der Kern (1c) wird axial leicht in Richtung Flansch (4) geschoben. Dadurch entsteht ein Spalt (17), welcher ausreicht, um die Distanzscheibe (9) bzw. ihre Scheibenhälften, aus dem Raum zwischen Flansch (3) und Flansch (4) herauszuziehen.

Es folgt das Entfernen des Bolzens (13) unter Aufhebung der Vorspannung des Elastomerlagers (1), so dass dieses aus der Vertiefung (7) und dann aus der Flanschöffnung herausgenommen werden kann.

Um dies zu erreichen, muss die Distanzscheibe (9) dicker als sein als die Tiefe der Vertiefung (7) inklusive der Vorspannung vom elastischen Element (1d). Um nämlich die Distanzscheibe 9 herauszunehmen, muss das elastische Element (1d) stärker vorgespannt werden als es im eingebauten Zustand schon ist. Wäre die herausgenommene Scheibe (9) nicht dicker als die Vertiefung (7) einschließlich dem gesamten Vorspannmaß des Elastomerteils (1d), wäre es nicht möglich, das gesamte elastische Lagerelement (1) zwischen den Flanschen (3) und (4) radial herauszunehmen.

### Demontage bei Ausführungsformen mit schiebbarer Hülse:

Die Ausgangslage wird hier durch Fig. 6 gut dargestellt. Zunächst wird auch hier der Spannbolzen (5), das Schichtlager (2A) sowie die Distanzhülse (6) entfernt.

Als nächste muss die Distanzscheibe (9) gelockert und entfernt werden. Dies geschieht durch Zusammenpressen der kegelförmigen elastischen Schichten (1d, wodurch der feste Kern (1c) in Richtung des Flansches (4) axial verschoben wird und einen Spalt (17) zwischen dem elastischen Lager (1) und der Distanzscheibe entstehen lässt. Hierfür bieten sich zwei Möglichkeiten an.

Bei der ersten Möglichkeit erfolgt das Zusammenpressen des Konuslagers über die Montagevorspannschraube (13), die in das Lager (1) geschraubt wird und durch die besagten Zugvorrichtungen (14) in Richtung des Flansches (4) gezogen wird (Fig. 4).

Da die Hülse (8) in einen Teil der Bohrung (10b) des Konuselementes (1A) hineinreicht und dort den Raum der Bohrung (10b') ausfüllt und durch das Feststellmittel (12) arretiert ist, muss als nächstes die besagte Hülse aus dem Konuselement (1) vollständig in den Flansch (3) bzw. in die dort vorgesehenen Bohrung (10a) geschoben werden. Dies erfolgt durch Lösung der Arretierung (12), Einführen und Verschrauben eines Montagebolzens (18) von der Seite des Flansches (4) über die Bohrungen (10c) mit der mit einem Innengewinde versehenen Hülse (8), Lösen des Feststellmittels (12) und vollständige Verschiebung der Hülse (8) aus dem elastischen Lager (1) in den Bohrungsraum (10a) im Flansch (3). Anschließend wird mittels Montagebolzen 13 die konische Schicht (1d) soweit vorgespannt, dass die Distanzscheibe (9) frei wird. Somit ist die Distanzscheibe (9) frei und kann entfernt werden. Ein Verschieben der Hülse (8) kann sich erübrigen, wenn die Distanzscheibe (9) in zwei Hälften vorliegt.

Bei der zweiten Möglichkeit erfolgt das Zusammenpressen des Konuslagers über einen Montagebolzen (18), der in das Innengewinde der Hülse (8) geschraubt wird und - nach Aufhebung der Arretierung der Hülse (8)- durch die besagte Zugvorrichtung (14) in Richtung des Flansches (4) gezogen wird. Diese Alternative kann nur angewendet werden, wenn die Distanzscheibe in zwei Hälften vorliegt, da die Hülse im Wesentlichen an ihrer ursprünglichen Position (in Bohrung (10b') und Bohrung (10a)) verbleibt.

Vor Entfernen des elastischen Lagers (1) und der Distanzscheibe (8) wird die Hülse (8)völlig in die Bohrung (10a) im Flansch (3) geschoben.

Es schließen sich folgende Montageschritte an:
Es wird ein neues entsprechend gestalteten elastischen Lagers (1), welches das alte ersetzen soll, in den Raum zwischen Flansch (3) und (4) eingeführt und der Montagevorspannbolzen (13), der von außen über die Bohrung (10c) im Flansch (4) geführt ist, mit dem Innengewinde der Bohrung (10b) des elastischen Lagers (1) verschraubt. Mittels einer Montage-Zugeinrichtung (14), welche eine axiale nach außen wirkende Zugkraft auf den Montagevorspannbolzen (13) und damit auf das elastische Lager (1) ausübt,
Damit wird das elastische Lager (1) in die Vertiefung (7) im Flansch (4) gezogen, wodurch zudem bewirkt wird, dass es eine Vorspannung erhält und mehr Platz zwischen den Flanschteilen (3)(4) entsteht. Dadurch ist es möglich, die Distanzscheibe (9) oder ihrer Hälften (9a)(9b) in den entstandenen Spalt zwischen elastischem vorgespannten Lager (1) und dem Flansch (3) so hinein zu schieben, dass ihre mittige Bohrung deckungsgleich mit den Bohrungen (10a) im Flansch (3) und (10b) im elastischen Lager (1) ist.

Nach Entfernen des Montagevorspannbolzens (13), wird durch die dadurch erfolgte Verringerung der Vorspannung des elastischen Lagers (1) die Distanzscheibe (9) fest zwischen dem Flanschen (3) und dem elastischen Lager(1) eingeklemmt.

Bei Verwendung einer schiebbaren Hülse (8) wird diese über ihr Innengewinde mit einem Montagebolzen (18) über die Bohrungen (10c)(10b)(10b') verbunden, wobei sich die Hülse zunächst in der Bohrung (10a) des Flansches (3) befindet. Nachdem die Distanzscheibe (9), wie oben beschrieben, eingeschoben und positioniert worden ist, wird die Hülse (8) in die Bohrung (10b') des elastischen Lagers (1) geschoben und am Flansch (3) mit einem Feststellmittel (12) arretiert. Anschließend wird der Montagebolzen (18) entfernt. Abschließend erfolgt Verschraubung und Verspannung der Konstruktion mittels des Spannbolzens (5) unter zuvor vorgenommener Anbringung der Distanzhülse (6) in die Bohrung (10c) des Flansches (4) und Hinzufügung des Sandwichlagerelementes (2A) außen am Flansch (4).

## Patentansprüche

1. Auf mindestens drei bis sechs ringförmig angeordneten Elastomerlager-Elementen basierende Lagerkonstruktion zur elastischen Lagerung von schweren Maschinenteilen, wobei jedes Elastomerlager-Element ohne Demontage und erneuter Montage der gesamten Lagerkonstruktion oder Teilen der zugehörigen Maschine einzeln montierbar und austauschbar ist, umfassend drei bis sechs oder mehr elastische Lager (1), einen ersten Flansch (3), der eine axiale Bohrung (10a) aufweist, und einen zweiten gegenüberliegenden Flansch (4) mit einer oder mehreren durchgehenden Bohrungen (10c), wobei jedes Lager (1) im Wesentlichen umfasst:
ein Gehäuse (1a), einen inneren unelastischen Kern (1c), welcher mittig eine Bohrung (10b) aufweist, und
ein Elastomerteil (1d) aus einer oder mehrerer Elastomerschichten, die durch unelastische Schichten voneinander getrennt sind,
wobei die Lager (1) zwischen den beiden Flanschen (3)(4) angeordnet, und letztere mittels Spannmitteln (5) über axiale Bohrungen (10) in den besagten einzelnen Bauteilen miteinander verspannt sind,
**dadurch gekennzeichnet, dass**
(i) der zweite Flansch (4) auf der dem Lager (1) bzw. dem ersten Flansch (3) zugewandten Seite eine zu einer Bohrung (10c) konzentrisch angeordnete Vertiefung (7) aufweist; in welche ein entsprechend geformtes Teil des Lagers (1) im betriebsbereiten Zustand der Lagerkonstruktion unter Vorspannung passgenau eingefügt und fixiert ist, wobei bei Demontage der Lagerkonstruktion zwecks Austausch des Lagers (1) dasselbige durch Aufhebung oder Verringerung der Vorspannung aus der besagten Vertiefung (7) heraus in den Raum zwischen den Flanschen (3) und (4) geschoben werden kann;
(ii) das elastische Lager (1) mit seiner Flansch (4) zugewandten Fläche oder mit einem darauf angebrachten Adapterteil (1b) genau in die besagte Vertiefung (7) von Flansch (4) passt, wobei zumindest der Teil der Bohrung (10b), der zum Flansch (4) ausgerichtet ist, mit einem Gewinde zur Aufnahme eines Montagevorspannbolzens (13) versehen ist, mit welcher das Lager (1) bei Montage im Zuge des Austausches nach Entfernung der Spannmittel (5) nach Einschieben in die Vertiefung (7) vorgespannt werden kann; und
(iii) zwischen dem Lager (1) und dem Flansch (3) mindestens eine mit einer mittigen Bohrung versehene Distanzscheibe (9) eingebracht ist, die auch aus zwei Distanzscheibenhälften (9a)(9b) bestehen kann, im betriebsbereiten Zustand der Lagerkonstruktion fest zwischen dem Flansch (3) und dem Lager (1) eingeklemmt ist und bei Demontage der Lagerkonstruktion nach Entfernung der Spannmittel (5) durch Verringerung der Vorspannung im Lager (1) mittels des Montagevorspannbolzens (13) entfernt werden kann.

2. Lagerkonstruktion nach Anspruch 1, **dadurch gekennzeichnet, dass** die Distanzscheibe (9) einen Reibungskoeffizienten seiner Seitenflächen gegenüber den angrenzenden Flächen des Lagers (1) und des Flansches (3) von ≥ 0.4 aufweist.

3. Lagerkonstruktion nach Anspruch 1 oder 2, **dadurch gekennzeichnet, dass** die Distanzscheibe (9) eine sphärische, konkave oder konvexe Krümmung aufweist, ebenso wie in diesem Fall die Grundfläche des elastischen Lagers (1), die an die Distanzscheibe (9) im betriebsbereiten Zustand passend anliegt.

4. Lagerkonstruktion nach einem der Ansprüche 1 - 3, **dadurch gekennzeichnet, dass** die Distanzscheibe (9) dicker ist als die Vertiefung (7) einschließlich des Vorspannmaßes des Elastomerteils (1d).

5. Lagerkonstruktion nach einem der Ansprüche 1 - 4, **dadurch gekennzeichnet, dass** die axiale Bohrung (10a) des Flansches (3) zur ganzen oder teilweisen Aufnahme einer axial verschiebbaren Hülse (8) vorgesehen ist, welche im betriebsbereiten Zustand der Lagerkonstruktion die Bohrung (10b) im Lager (1) und die Bohrung (10a) im Flansch (3) jeweils teilweise ausfüllt, und eine Länge aufweist, die gleich oder kleiner der Länge der Bohrung (10a) ist, wobei zumindest ein Teil (10b') der Bohrung (10b), der zum Flansch (3) ausgerichtet ist, den gleichen Durchmesser wie die Bohrung (10a) im Flansch (3) zur Aufnahme der verschiebbaren Hülse (8) besitzt, welche durch Feststellmittel (12) fest fixiert ist, und bei Demontage der Lagerkonstruktion zwecks Austausch des elastischen Lagers (1) mit Hilfe eines Montagebolzens (18) vollständig aus dem elastischen Lager (1) heraus in die Bohrung (10a) des Flansches (3) geschoben werden kann.

6. Lagerkonstruktion nach einem der Ansprüche 1 - 5, **dadurch gekennzeichnet, dass** besagte Spannmittel (5) einen Schraubbolzen umfassen, welcher mindestens durch die Bohrung (10c) im Flansch (4), und die Bohrung (10b) im Lager (1) geführt ist und mit Flansch (3) unter Verspannung der Lagerkonstruktion verschraubt werden kann.

7. Lagerkonstruktion nach einem der Ansprüche 1 - 6, **dadurch gekennzeichnet, dass** die axialen Bohrungen (10a, 10b, 10c), welche durch die Flansche (3) (4) und das dazwischen befindliche elastische Lager (1) laufen, entsprechend ihrer Funktion und der in ihr geführten Bauteile mit unterschiedlichen oder gleichen Durchmessern ausgestattet sind, um unterschiedlich oder gleich dicke Spann(5)- und/ oder Montagemittel (13)(18) in ihnen zu führen.

8. Lagerkonstruktion nach einem der Ansprüche 1 - 7, **dadurch gekennzeichnet, dass** die Bohrung (10c) eine Distanzhülse (6) aufweist, deren Länge der Dicke des Flansches (3) entspricht.

9. Lagerkonstruktion nach einem der Ansprüche 1 - 8, **dadurch gekennzeichnet, dass** sie für die Montage im Zuge des Austausches des elastischen Lagers (1) eine Zugeinrichtung (14) aufweist, welche eine Bohrung (10e) umfasst, die mit der Bohrung (10c) im Flansch (4) in Verbindung steht, und die gegenüber dem Lager (1) auf der gegenüberliegenden Seite des Flansches (4) angebracht ist und dazu dient, den Montagevorspannbolzen (13) durch Zugkraft in die Vertiefung (7) im Flansch (4) zu pressen, um dem zu montierenden Lager (1) eine Vorspannung zu vermitteln, sowie ausreichend Platz für die Einbringung der Distanzscheibe (9) oder ihrer Halbscheiben zwischen Lager (1) und dem Flansch (3) zur Verfügung zu stellen, wobei besagte Zugeinrichtung (14) nach erfolgtem Austausch des Lagers wieder entfernt wird.

10. Lagerkonstruktion nach einem der Ansprüche 1 - 9, **dadurch gekennzeichnet, dass** die axiale Bohrung (10a) des Flansches (3) mit einem endständigen Innengewinde (11) versehen ist.

11. Lagerkonstruktion nach einem der Ansprüche 1 - 10, **dadurch gekennzeichnet, dass** das elastische Lager (1) ein Konuslager (1A) ist.

12. Lagerkonstruktion nach einem der Ansprüche 1 - 11, **dadurch gekennzeichnet, dass** es im betriebsbereiten Zustand ein zweites elastisches Lager (2) aufweist, welches über der Bohrung (10c) im Flansch (4) gegenüber dem elastischen Lager (1) angebracht ist, und mittels der Spannschraube (5), die durch eine Bohrung (10d) im Sandwichelement geführt und mit dem endständigen Innengewinde (11) im Flansch (3) verschraubbar ist, zusammen mit dem elastischen Lager (1) gegenüber den Flanschen (3)(4) verspannt werden kann.

13. Lagerkonstruktion nach Anspruch 12, **dadurch gekennzeichnet, dass** das zweite elastische Lager (2) ein Sandwichlager (2A) ist.

14. Lagerkonstruktion nach einem der Ansprüche 1 - 13, **dadurch gekennzeichnet, dass** es 3-, 4- oder 6 - 72 Kombilager aus einem elastischen Lager (1) und einem elastischen Lager (2) umfasst, wobei das elastische Lager (1) ein Konuslager (1A) und das elastische Lager (2) ein Sandwichlager (2A) ist.

15. Windkraftanlage, **dadurch gekennzeichnet, dass** sie eine Lagerkonstruktion gemäß einem der Ansprüche 1 - 14 aufweist.

16. Verfahren zum Austauschen von einzelnen Elastomerlager-Elementen aus einer aus mehreren Elastomerlager-Elementen umfassenden Lagerkonstruktion einer Anlage oder Maschine ohne Demontage und erneuter Montage der gesamten Lagerkonstruktion oder Teilen der zugehörigen Maschine, **dadurch gekennzeichnet dass** man eine Lagerkonstruktion gemäß einem der Ansprüche 1 - 11 einsetzt, wobei folgende Demontageschritte durchgeführt werden:
(ai) Herausdrehen der Spannschraube (5) aus dem Innengewinde (11) im Flansch (3) und Herausziehen aus den Bohrungen (10a,b,c) der betreffenden Bauteile
(aii) Entfernen der Distanzhülse (6) und ggf. des elastischen Lagers (2);
(aiii) bei Verwendung einer schiebbaren Hülse (8): Verschraubung eines Montagebolzens (18) von der Seite des Flansches (4) über die Bohrungen (10c) mit der mit einem Innengewinde versehenen Hülse (8), die mit einem Teil die Bohrung (10b') des elastischen Lagers (1) ausfüllt, Lösen des Feststellmittels (12) und vollständige Verschiebung der Hülse (8) aus dem elastischen Lager (1) in den Bohrungsraum (10a) im Flansch (4);
(aiv) Einschrauben eines mit einem Gewinde versehenen Montagevorspannbolzens (13) in das Innengewinde der Bohrung (10b) des Lagers (1),
oder alternativ bei Vorhandensein der Hülse (8): Einschrauben eines mit eine Gewinde versehenen Montagebolzens (18) in das Innengewinde der Hülse (8),
und Ausübung einer Zugkraft (15) auf den betreffenden Bolzen mittels einer Montage-Zugeinrichtung (14) unter gleichzeitiger Erhöhung der Vorspannung des Elastomerteils (1d) des Lagers (1), wodurch der Sitz der Distanzscheibe (9) gelockert wird;
(av) Entfernen der Distanzscheibe (9) bzw. ggf. ihrer Scheibenhälften sowie des Montagevorspannbolzens (13), sowie
(avi) anschließend Entfernen des betreffenden Montagebolzens sowie dann Herausnahme des auszutauschende elastischen Lagers (1) aus der Vertiefung (7) im Flansch (3) und Entfernen des Lagers aus dem Raum zwischen den Flanschen (3) und (4).

17. Verfahren nach Anspruch 16, **dadurch gekennzeichnet dass** anschließend folgende Montageschritte durchgeführt werden:
(bi) Einführen eines neuen entsprechend gestalteten elastischen Lagers (1) in den Raum zwischen Flansch (3) und (4) und Verschraubung eines Montagevorspannbolzens (13), der von außen über die Bohrung (10c) im Flansch (4) geführt ist, mit dem Innengewinde der Bohrung (10b) des elastischen Lagers (1)
(bii) Einschieben des elastischen Lagers (1) in die Vertiefung (7) im Flansch (4) mittels eines Montage-Zugeinrichtung (14), welche eine axiale nach außen wirkende Zugkraft (15) auf den Montagevorspannbolzen (13) und damit auf das elastische Lager (1) ausübt, wodurch bewirkt wird, dass das elastische Lager (1) unter Platzgewinnung zwischen den Flanschen (3) und (4) eine Vorspannung erhält;
(biii) Einschieben der Distanzscheibe (9) oder ihrer Hälften (9a)(9b) in den vorhandenen und durch die Vorspannung entstandenen Spalt zwischen elastischem vorgespannten Lager (1) und dem Flansch (3), so dass ihre mittige Bohrung deckungsgleich mit den Bohrungen (10a) im Flansch (3) und (10b) im elastischen Lager (1) ist;
(biv) Entfernen des Montagevorspannbolzens (13), wodurch durch Verringerung der Vorspannung des elastischen Lagers (1) dieses und die Distanzscheibe (9) fest zwischen den Flanschen (3) und (4) eingeklemmt wird,
(bv) bei Verwendung einer schiebbaren Hülse (8): Verbinden eines Montagebolzens (18) über die Bohrungen (10c)(10b)(10b') mit der mit einem Innengewinde ausgestatteten Hülse (8), welche sich in der Bohrung (10a) des Flansches (3) befindet, Hereinziehen besagter Hülse (8) in die Bohrung (10b') des elastischen Lagers (1), und Arretierung der Hülse (8) am Flansch (3) mit einem Feststellmittel (12) und Entfernung des Montagebolzens (18); und
(bvi) Verschraubung und Verspannung der Konstruktion mittels der Spannmittel (5), unter zuvor vorgenommener Anbringung einer Distanzhülse (6) in die Bohrung (10c) des Flansches (4) und / oder Hinzufügung eines zweite elastischen Lagers (2) am Flansch (4).

## Claims

1. Bearing construction based on at least three to six annularly arranged elastomer bearing elements, for resiliently bearing heavy machine parts, each elastomer bearing element being mountable and exchangeable individually without disassembly and reassembly of the entire bearing construction or parts of the associated machine, the bearing construction comprising three to six or more resilient bearings (1), a first flange (3) which has an axial hole (10a), and a second, opposite flange (4) comprising one or more continuous holes (10c), each bearing (1) substantially comprising:
a housing (1a), an inner, non-resilient core (1c) which has a hole (10b) centrally, and
an elastomer part (1d) consisting of one or more elastomer layers which are separated from one another by non-resilient layers,
the bearings (1) being arranged between the two flanges (3)(4), and said flanges being clamped together by clamping means (5) via axial holes (10) in said individual components,
**characterized in that**
(i) the second flange (4) has, on the side facing the bearing (1) or the first flange (3), a depression (7) which is arranged concentrically with respect to a hole (10c) and into which a correspondingly shaped part of the bearing (1) is inserted and fixed in an exact fit under bias in the operation-ready state of the bearing construction, the bearing (1), during disassembly of the bearing construction to exchange said bearing, being able to be slid out of said depression (7) into the space between the flanges (3) and (4) by increasing or decreasing the bias;
(ii) the face, facing the flange (4), or an attached adapter part (1b) of the resilient bearing (1) fitting exactly in said depression (7) in the flange (4), at least the part of the hole (10b) that is oriented toward the flange (4) being provided with a thread for receiving a mounting biasing bolt (13), by means of which the bearing (1) can be biased by sliding into the depression (7) during assembly, in the course of the exchange after removal of the clamping means (5); and
(iii) at least one spacer disk (9), which is provided with a central hole, can also consist of two spacer disk halves (9a)(9b), is clamped firmly between the flange (3) and the bearing (1) in the operation-ready state of the bearing construction and can be removed, during disassembly of the bearing construction, after removal of the clamping means (5), by reducing the bias in the bearing (1) by means of the mounting biasing bolt (13), is introduced between the bearing (1) and the flange (3).

2. Bearing construction according to claim 1, **characterized in that** the spacer disk (9) has a coefficient of friction of the side faces thereof, against the adjacent faces of the bearing (1) and of the flange (3), of ≥ 0.4.

3. Bearing construction according to either claim 1 or claim 2, **characterized in that** the spacer disk (9) has a spherical, concave or convex curvature, just as the base face of the resilient bearing (1) that is positioned fittingly against the spacer disk (9) in the operation-ready state does in this case.

4. Bearing construction according to any of claims 1-3, **characterized in that** the spacer disk (9) is thicker than the depression (7), including the bias extent of the elastomer part (1d).

5. Bearing construction according to any of claims 1-4, **characterized in that** the axial hole (10a) in the flange (3) is provided for completely or partly receiving an axially displaceable sleeve (8) which partly fills out each of the hole (10b) in the bearing (1) and the hole (10a) in the flange (3) in the operation-ready state of the bearing construction and which is of a length less than or equal to length of the hole (10a), at least a part (10b') of the hole (10b) that is oriented toward the flange (3) having the same diameter as the hole (10a) in the flange (3) for receiving the displaceable sleeve (8), which sleeve is fixed in place by fixing means (12) and can be slid completely out of the resilient bearing (1) into the hole (10a) in the flange (3) by means of a mounting bolt (18) during disassembly of the bearing construction for exchanging the resilient bearing (1).

6. Bearing construction according to any of claims 1-5, **characterized in that** said clamping means (5) comprise a threaded bolt which is passed at least through the hole (10c) in the flange (4) and the hole (10b) in the bearing (1) and can be screwed to the flange (3), thus clamping the bearing construction.

7. Bearing construction according to any of claims 1-6, **characterized in that** the axial holes (10a, 10b, 10c), which pass through the flanges (3) (4) and the resilient bearing (1) located between them, are provided with different or identical diameters depending on the function thereof and the components guided therein, so as to guide clamping means (5) and/or mounting means (13)(18) of different or identical thicknesses therein.

8. Bearing construction according to any of claims 1-7, **characterized in that** the hole (10c) has a spacer sleeve (6), the length of which corresponds to the thickness of the flange (3).

9. Bearing construction according to any of claims 1-8, **characterized in that** it has, for mounting in the course of exchanging the resilient bearing (1), a pulling device (14) which comprises a hole (10e) that is connected to the hole (10c) in the flange (4), is applied opposite the bearing (1) on the opposite side of the flange (4) and serves to press the mounting biasing bolt (13) into the depression (7) in the flange (4) by tensile force, so as to give the bearing (1) to be mounted a bias, and to provide sufficient space for introducing the spacer disk (9) or the half disks thereof between the bearing (1) and the flange (3), said pulling device (14) being removed again after successful exchange of the bearing.

10. Bearing construction according to any of claims 1-9, **characterized in that** the axial hole (10a) in the flange (3) is provided with an end-positioned internal thread (11).

11. Bearing construction according to any of claims 1-10, **characterized in that** the resilient bearing (1) is a cone bearing (1A).

12. Bearing construction according to any of claims 1-11, **characterized in that**, in the operation-ready state, it has a second resilient bearing (2) which is applied against the resilient bearing (1) via the hole (10c) in the flange (4) and which, by means of the clamping screw (5) that is passed through a hole (10d) in the sandwich element and can be screwed to the end-positioned internal thread (11) in the flange (3), can be clamped against the flanges (3)(4) together with the resilient bearing (1).

13. Bearing construction according to claim 12, **characterized in that** the second resilient bearing (2) is a sandwich bearing (2A).

14. Bearing construction according to any of claims 1-13, **characterized in that** it comprises 3-, 4- or 6-72 combination bearings consisting of a resilient bearing (1) and a resilient bearing (2), the resilient bearing (1) being a cone bearing (1A) and the resilient bearing (2) being a sandwich bearing (2A).

15. Wind turbine, **characterized in that** it comprises a bearing construction according to any of claims 1-14.

16. Method for exchanging individual elastomer bearing elements from a bearing construction, comprising a plurality of elastomer bearing elements, of a system or machine without disassembling and reassembling the entire bearing construction or parts of the associated machine, **characterized in that** a bearing construction according to any of claims 1-11 is used, the following disassembly steps being carried out:
(ai) unscrewing the clamping screw (5) from the internal thread (11) in the flange (3) and pulling it out of the holes (10a, b, c) in the relevant components;
(aii) removing the spacer sleeve (6) and if applicable the resilient bearing (2);
(aiii) if a slidable sleeve (8) is used: screwing a mounting bolt (18) to the sleeve (8), which is provided with an internal thread and part of which fills out the hole (10b') in the resilient bearing (1), from the side of the flange (4) via the holes (10c), releasing the fixing means (12), and completely displacing the sleeve (8) out of the resilient bearing (1) in the hole space (10a) in the flange (4);
(aiv) screwing a mounting biasing bolt (13) provided with a thread into the internal thread of the hole (10b) in the bearing (1), or alternatively, if the sleeve (8) is present: screwing a mounting bolt (18) provided with a thread into the internal thread of the sleeve (8),
and exerting a tensile force (15) on the relevant bolt by means of a mounting pulling device (14) while simultaneously increasing the bias of the elastomer part (1d) of the bearing (1), causing the seat of the spacer disk (9) to be loosened;
(av) removing the spacer disk (9) or if applicable the disk halves thereof and the mounting biasing bolt (13), and
(avi) subsequently removing the relevant mounting bolt and then taking the resilient bearing (1) to be exchanged out of the depression (7) in the flange (3) and removing the bearing from the space between the flanges (3) and (4).

17. Method according to claim 16, **characterized in that** the following mounting steps are then carried out:
(bi) inserting a new, correspondingly configured resilient bearing (1) into the space between the flanges (3) and (4), and screwing the mounting biasing bolt (13), which is guided in the flange (4) from the outside via the hole (10c), to the internal thread of the hole (10b) in the resilient bearing (1);
(bii) inserting the resilient bearing (1) into the depression (7) in the flange (4) by means of a mounting pulling device (14) which exerts an axially outwardly acting tensile force (15) on the mounting biasing bolt (13) and thus on the resilient bearing (1), causing the resilient bearing (1) to attain a bias between the flanges (3) and (4) with a gain in space;
(biii) sliding the spacer disk (9) or the halves (9a)(9b) thereof into the resulting gap, produced by the bias, between the resiliently biased bearing (1) and the flange (3) in such a way that the central hole of said disk is coincident with the holes (10a) in the flange (3) and (10b) in the resilient bearing (1);
(biv) removing the mounting biasing bolt (13), the reduction in the bias of the resilient bearing (1) causing said bearing and the spacer disk (9) to be firmly gripped between the flanges (3) and (4);
(bv) if a slidable sleeve (8) is used: connecting a mounting bolt (18) via the holes (10c)(10b)(10b') to the sleeve (8) which is provided with an internal thread and which is located in the hole (10a) in the flange (3), pulling said sleeve (8) into the
hole (10b') in the resilient bearing (1), and locking the sleeve (8) on the flange (3) using a fixing means (12) and removing the mounting bolt (18); and
(bvi) screwing and clamping the construction by means of the clamping means (5), with a spacer sleeve (6) having been brought into the hole (10c) in the flange (4) and/or a second resilient bearing element (2) having been added to the flange (4) in advance.

## Revendications

1. Structure de palier basée sur au moins trois à six éléments de palier en élastomère disposés de manière annulaire permettant le support élastique de pièces lourdes de machine, chaque élément de palier en élastomère pouvant être monté et remplacé individuellement sans démontage et remontage de l'ensemble de la structure de palier ou de pièces de la machine associée, comprenant trois à six, ou plus, paliers élastiques (1), une première bride (3) présentant un alésage axial (10a) et une seconde bride (4) opposée comportant un ou plusieurs alésages traversants (10c), chaque palier (1) comprenant essentiellement :
un boîtier (1a), un noyau inélastique interne (1c) qui présente un alésage (10b) en son centre, et
une pièce élastomère (1d) constituée d'une ou plusieurs couches élastomères qui sont séparées les unes des autres par des couches inélastiques,
le palier (1) étant disposé entre les deux brides (3) (4), et lesdites brides étant serrées l'une contre l'autre au moyen de moyens de serrage (5) par l'intermédiaire d'alésages axiaux (10) dans lesdits éléments structuraux individuels,
**caractérisée en ce que**
(i) la seconde bride (4) présente, du côté faisant face au palier (1) ou à la première bride (3), un évidement (7) disposé concentriquement par rapport à un alésage (10c) ; dans lequel évidement une partie de forme correspondante du palier (1) est insérée et fixée avec précision sous prétension dans l'état de fonctionnement de la structure de palier, lorsque la structure de palier est démontée pour remplacer le palier (1), celui-ci peut être poussé hors dudit évidement (7) et dans l'espace entre les brides (3) et (4) par suppression ou réduction de la prétension ;
(ii) le palier élastique (1) dont la surface fait face à la bride (4) ou doté d'une pièce d'adaptation (1b) fixée sur celui-ci s'intègre avec précision dans ledit évidement (7) de la bride (4), au moins la pièce de l'alésage (10b), alignée avec la bride (4), est pourvue d'un filetage permettant la réception d'un boulon de prétension de montage (13), avec lequel le palier (1) peut être prétendu lors du montage au cours du remplacement après l'enlèvement des moyens de serrage (5) après l'insertion dans l'évidement (7) ; et
(iii) au moins une rondelle d'écartement (9) pourvue d'un alésage central est insérée entre le palier (1) et la bride (3), laquelle peut également être constituée de deux moitiés de rondelle d'écartement (9a) (9b), et est coincée fermement entre la bride (3) et le palier (1) dans l'état de fonctionnement de la structure de palier, et, lorsque la structure de palier est démontée, peut être enlevée après l'enlèvement des moyens de serrage (5) en réduisant la prétension dans le palier (1) au moyen du boulon de prétension de montage (13).

2. Structure de palier selon la revendication 1, **caractérisée en ce que** la rondelle d'écartement (9) présente un coefficient de frottement de ses surfaces latérales contre les surfaces adjacentes du palier (1) et de la bride (3) de ≥ 0,4.

3. Structure de palier selon la revendication 1 ou 2, **caractérisée en ce que** la rondelle d'écartement (9) présente une courbure sphérique, concave ou convexe et que, dans ce cas, la surface de base du palier élastique (1) s'applique correctement sur la rondelle d'écartement (9) dans l'état de fonctionnement.

4. Structure de palier selon l'une des revendications 1 à 3, **caractérisée en ce que** la rondelle d'écartement (9) est plus épaisse que l'évidement (7), y compris la dimension de prétension de la pièce élastomère (1d).

5. Structure de palier selon l'une des revendications 1 à 4, **caractérisée en ce que** l'alésage axial (10a) de la bride (3) est prévu pour recevoir entièrement ou partiellement un manchon déplaçable (8) axialement qui, lorsque la structure de palier est dans un état de fonctionnement, comble partiellement l'alésage (10b) dans le palier (1) et l'alésage (10a) dans la bride (3) respectivement, et présente une longueur égale ou inférieure à la longueur de l'alésage (10a), au moins une partie (10b') de l'alésage (10b) alignée avec la bride (3) présentant le même diamètre que l'alésage (10a) dans la bride (3) pour recevoir le manchon déplaçable (8) qui est fermement fixé par des moyens de fixation (12) et, lorsque la structure de palier est démontée pour remplacer le palier élastique (1), peut être poussé complètement hors du palier élastique (1) dans l'alésage (10a) de la bride (3) à l'aide d'un boulon de montage (18).

6. Structure de palier selon l'une des revendications 1 à 5, **caractérisée en ce que** lesdits moyens de serrage (5) comprennent un boulon à vis qui est guidé au moins à travers l'alésage (10c) dans la bride (4) et l'alésage (10b) dans le palier (1) et peut être vissé sur la bride (3) tout en mettant sous tension la structure de palier.

7. Structure de palier selon l'une des revendications 1 à 6, **caractérisée en ce que** les alésages axiaux (10a, 10b, 10c), lesquels traversent les brides (3) (4) et le palier élastique (1) situé entre elles, sont équipés de diamètres différents ou identiques selon leur fonction et les éléments structuraux guidés dans ceux-ci, afin de guider des moyens de serrage (5) et/ou de montage (13) (18) d'épaisseur différente ou identique dans ceux-ci.

8. Structure de palier selon l'une des revendications 1 à 7, **caractérisée en ce que** l'alésage (10c) présente un manchon d'écartement (6) dont la longueur correspond à l'épaisseur de la bride (3).

9. Structure de palier selon l'une des revendications 1 à 8, **caractérisée en ce qu'**elle comporte un dispositif de traction (14) pour le montage au cours du remplacement du palier élastique (1), ledit dispositif de traction comprend un alésage (10e) qui est relié à l'alésage (10c) dans la bride (4), et est monté sur le côté opposé de la bride (4) par rapport au palier (1) et sert à presser le boulon de prétension de montage (13) dans l'évidement (7) dans la bride (4) par une force de traction afin de transmettre une prétension au palier (1) à monter, ainsi que pour mettre à disposition un espace suffisant pour l'insertion de la rondelle d'écartement (9) ou de ses demi-rondelles entre le palier (1) et la bride (3), ledit dispositif de traction (14) étant à nouveau enlevé après le remplacement du palier.

10. Structure de palier selon l'une des revendications 1 à 9, **caractérisée en ce que** l'alésage axial (10a) de la bride (3) est pourvu d'un filetage intérieur d'extrémité (11).

11. Structure de palier selon l'une des revendications 1 à 10, **caractérisée en ce que** le palier élastique (1) est un palier conique (1A).

12. Structure de palier selon l'une des revendications 1 à 11, **caractérisée en ce que**, à l'état de fonctionnement, elle présente un second palier élastique (2) qui est fixé au-dessus de l'alésage (10c) dans la bride (4) par rapport au palier élastique (1), et au moyen de la vis de serrage (5), qui est guidée à travers un alésage (10d) dans l'élément de sandwich et peut être vissée au filetage intérieur d'extrémité (11) dans la bride (3) et mise sous tension avec le palier élastique (1) par rapport aux brides (3) (4).

13. Structure de palier selon la revendication 12, **caractérisée en ce que** le second palier élastique (2) est un palier sandwich (2A).

14. Structure de palier selon l'une des revendications 1 à 13, **caractérisée en ce qu'**elle comprend 3, 4 ou 6 à 72 paliers combinés constitués d'un palier élastique (1) et d'un palier élastique (2), le palier élastique (1) étant un palier conique 1A) et le palier élastique (2) étant un palier sandwich (2A).

15. Éolienne, **caractérisée en ce qu'**elle présente une structure de palier selon l'une des revendications 1 à 14.

16. Procédé permettant de remplacer des éléments de palier en élastomère individuels d'une structure de palier d'un système ou d'une machine comprenant plusieurs éléments de palier en élastomère sans démonter et remonter l'ensemble de la structure de palier ou des parties de la machine associée, **caractérisé en ce qu'**une structure de palier selon l'une des revendications 1 à 11 est utilisée, les étapes de démontage suivantes étant effectuées :
(ai) dévissage de la vis de serrage (5) du filetage intérieur (11) dans la bride (3) et extraction de ladite vis de serrage des alésages (10a, b, c) des éléments structuraux concernés ;
(aii) enlèvement du manchon d'écartement (6) et, éventuellement, du palier élastique (2) ;
(aiii) lors de l'utilisation d'un manchon (8) coulissant : vissage d'un boulon de montage (18) du côté de la bride (4), par l'intermédiaire des alésages (10c), au manchon (8) pourvu d'un filetage intérieur, lequel comble en partie l'alésage (10b') du palier élastique (1), libération des moyens de fixation (12) et déplacement complet du manchon (8) du palier élastique (1) jusque dans l'espace d'alésage (10a) dans la bride (4) ;
(aiv) vissage d'un boulon de prétension de montage (13) pourvu d'un filetage dans le filetage intérieur de l'alésage (10b) du palier (1), ou, alternativement, lorsque le manchon (8) est présent : vissage d'un boulon de montage (18) pourvu d'un filetage dans le filetage intérieur du manchon (8),
et exercice d'une force de traction (15) sur le boulon concerné au moyen d'un dispositif de traction de montage (14) ainsi qu'augmentation simultanée de la prétension de la partie élastomère (1d) du palier (1), moyennant quoi le siège de la rondelle d'écartement (9) est déverrouillé ;
(av) enlèvement de la rondelle d'écartement (9) ou, éventuellement, de ses moitiés de rondelle ainsi que du boulon de prétension de montage (13), puis
(avi) enlèvement consécutif du boulon de montage concerné, puis retrait du palier élastique (1) à remplacer de l'évidement (7) dans la bride (3) et retrait du palier de l'espace entre les brides (3) et (4).

17. Procédé selon la revendication 16, **caractérisé en ce que** les étapes de montage suivantes sont en outre effectuées :
(bi) introduction d'un nouveau palier élastique (1) de conception correspondante dans l'espace entre les brides (3) et (4) et vissage d'un boulon de prétension de montage (13), qui est guidé de l'extérieur jusque dans la bride (4) par l'intermédiaire de l'alésage (10c), avec le filetage intérieur de l'alésage (10b) du palier élastique (1) ;
(bii) insertion du palier élastique (1) dans l'évidement (7) dans la bride (4) au moyen d'un dispositif de traction de montage (14), lequel exerce une force de traction (15) agissant axialement vers l'extérieur sur le boulon de prétension de montage (13) et ainsi sur le palier élastique (1), moyennant quoi une prétension du palier élastique (1) est provoquée tout en gagnant de l'espace entre les brides (3) et (4) ;
(biii) insertion de la rondelle d'écartement (9) ou de ses moitiés (9a) (9b) dans l'espace existant créé par la prétension entre le palier élastique (1) prétendu et la bride (3) de telle sorte que son alésage central coïncide avec les alésages (10a) dans la bride (3) et (10b) dans le palier élastique (1) ;
(biv) enlèvement du boulon de prétension de montage (13), moyennant quoi, en réduisant la prétension du palier élastique (1), celui-ci et la rondelle d'écartement (9) sont fermement serrés entre les brides (3) et (4) ;
(bv) lors de l'utilisation d'un manchon (8) coulissant : raccord d'un boulon de montage (18), par l'intermédiaire des alésages (10c) (10b) (10b'), au manchon (8) équipé d'un filetage intérieur, lequel est situé dans l'alésage (10a) de la bride (3), introduction dudit manchon (8) dans l'alésage (10b') du palier élastique (1), et blocage du manchon (8) sur la bride (3) avec un moyen de fixation (12) et enlèvement du boulon de montage (18) ; et
(bvi) vissage et mise sous tension de la structure au moyen du moyen de tension (5), avec installation au préalable d'un manchon d'écartement (6) dans l'alésage (10c) de la bride (4) et/ou ajout d'un second palier élastique (2) sur la bride (4).
